# EUROPEAN PATENT SPECIFICATION

(11) **EP 2 454 895 B1**
(45) Date of publication and mention of the grant of the patent: **09.08.2017**
(21) Application number: 10721831.5
(22) Date of filing: 10.06.2010
(51) Int. Cl.: H04W 4/22

(54) **NETWORK-ASSISTED INITIATION OF EMERGENCY CALLS FROM A MULTI-MODE WIRELESS COMMUNICATION DEVICE**
NETZUNTERSTÜTZTER VERBINDUNGSAUFBAU VON NOTRUFEN VON EINER DRAHTLOSEN MULTIMODALEN KOMMUNIKATIONSVORRICHTUNG AUS
INITIALISATION ASSISTÉE PAR RÉSEAU D'APPEL D'URGENCE À PARTIR D'UN DISPOSITIF MULTIMODAL DE COMMUNICATION SANS FIL

(30) Priority: 17.07.2009 US 226478 P; 01.04.2010 US 752205
(43) Date of publication of application: 23.05.2012
(73) Proprietor: Telefonaktiebolaget LM Ericsson (publ), 164 83 Stockholm (SE)
(72) Inventor: HEDMAN, Peter, S-252 51 Helsingborg (SE); LINDHOLM, Fredrik, S-112 15 Stockholm (SE)
(74) Representative: Ericsson
(86) International application number: PCT/EP2010/058155
(87) International publication number: WO 2011/006718

(56) References cited:
- EP-A1- 2 026 513
- CN-A- 101 296 509
- DE-A1-102005 019 340
- US-A1- 2008 102 784
- ALCATEL-LUCENT: "Emergency Support Indication for IMS emergency call" 3GPP DRAFT; R2-092174 IMS EMERGENCY INDICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090316, 16 March 2009 (2009-03-16), XP050340004 [retrieved on 2009-03-16]

## Description

### TECHNICAL FIELD

The present invention relates generally to making an emergency call from a multi-mode wireless communications device, and particularly to providing a multi-mode wireless communication device with information about which access networks available to it support emergency calls, prior to initiation of an emergency call.

### BACKGROUND

For the foreseeable future, a variety of different radio access technologies (RATs) will exist in parallel. For example, the 3rd Generation Partnership Project (3GPP) and the 3GPP2 are simultaneously developing competing RAT standards, based on Wideband Code Division Multiple Access (WCDMA) and CDMA2000, respectively. Even 3GPP itself develops different RAT standards, some evolutionary with a concern for backwards compatibility (e.g., High-Speed Packet Access, HSPA) and some revolutionary with a focus on performance irrespective of backwards compatibility (e.g., Long Term Evolution, LTE). The same can be said of 3GPP2. Furthermore, as 3GPP and 3GPP2 continue to develop their respective RAT standards, each develop different technology stages or releases (e.g., 3GPP provides different releases of HSPA, including Release 5, 6, and 7). In addition to these technologies, wireless local area network (WLAN) and "WiMax" technologies may be widely available, often side-by-side with other technologies and with each other.

With such a variety of RATs available, multiple wireless operators may deploy different RATs in any given area, with varying degrees of interoperability permitted between them. In fact, because deployment of any technology is likely to be gradual, and because any one technology may not be sufficient to provide ubiquitous coverage and continuous high quality of service, even a single wireless operator may deploy different RATs in any given area, with overlapping coverage.

Thus, at any given time and location, multiple access networks (ANs) implementing different RATs may be accessible to a wireless communication device. A multi-mode wireless communication device supports multiple RATs, and can therefore select, or be directed to select, any one of multiple different ANs for initiating a given call.

EP 2026513 discloses an apparatus and a method for facilitating an emergency call session using a packet-switched-capable wireless device. The wireless device collects information associated with available access types. Here, a collector is configured to collect available access type information of available network access types available to the wireless device. A report is generated which lists the collected information. Here, a reporter is configured to generate an available access type report that includes the available access type information collected by the collector The report is routed to a network node that analyses the information and accesses a database at which information is present for identifying an access type or domain type which the wireless device should use for an emergency call. A response message is generated at the network node and returned to the wireless device. The wireless device then uses the information contained In the response message for further communication.

The discussion document "Emergency Support Indication for IMS emergency call" submitted by Alcatel-Lucent to 3GPP TSG-RAN WG2 meeting in Seoul, Korea, in March 2009 discloses provision of Emergency Support Indication indicating EPS capability of an eNodeB in a system information broadcast message. A comparison between approaches for this provision is discussed. The approaches consists of 1) sending a combined indication of the cell and EPS capability in NAS signaling only, 2) sending the combined indication on System Information Broadcast, and 3) Send the combined indication in the NAS and System Information Broadcast.

Selection between multiple ANs proves particularly challenging when a multi-mode device attempts to initiate an emergency call. Not all ANs available to the multi-mode device may support emergency calls. An AN, for example, may not be capable of prioritizing emergency calls over non-emergency calls/services, may not be able to provide sufficient quality of service for emergency calls, and/or may not offer localization services to properly route emergency calls. The multi-mode device may therefore initiate an emergency call over one AN, e.g., a non-3GPP AN, only to find out that the AN does not support that emergency call. If the multi-mode device finds out that the AN does not support the emergency call after the call has already been set up, the call may be dropped altogether or poor quality of service may hinder communication. Moreover, even if the multi-mode device finds out that the AN does not support the emergency call before the call has been setup, and can thereafter select a different AN for redirecting the emergency call, the newly selected AN may very well exhibit the same behavior. This trial and error process potentially adds considerable delay to the time required to successfully place an emergency call from a multi-mode device, a delay that in some emergencies is simply unacceptable.

### SUMMARY

The invention is defined by the subject-matter of the independent claims. Preferred implementations are set out in the dependent claims. Teachings herein provide a multi-mode wireless communication device with information about which access networks available to it support emergency calls, prior to initiation of an emergency call. Provided with this information, the device can intelligently select an access network over which to initiate the emergency call based on which access networks actually support that emergency call. By eliminating or at least minimizing the possibility that the emergency call will be redirected to a different access network, the teachings reduce the delay required to successfully place the emergency call and increase the chance of setting up the emergency call with a satisfactory quality of service.

More particularly, a multi-mode wireless communication device according to one embodiment of the present invention is configured to access a core network of a wireless communication system via any one of multiple different access networks (e.g., GSM/EDGE, WiMAX, or WLAN). Not all of these access networks may support emergency calls. Accordingly, to assist the multi-mode device with the selection of which access network it should use to initiate an emergency call, one or more servers in the core network are configured to send emergency support information to the device that indicates which access networks available to the device support emergency calls. The emergency support information may simply indicate which access networks, in general, support emergency calls, or may more specifically indicate which access networks support one or more certain types of emergency calls (e.g., IMS emergency calls).

Regardless, the server(s) in the core network advantageously send emergency support information to the device prior to the device initiating an emergency call. In one embodiment, for example, the server(s) are configured to obtain, before the multi-mode device initiates an emergency call, a non-emergency event notification. The non-emergency event notification indicates to the server(s) that one or more non-emergency events associated with the device have occurred. A non-emergency event as used herein refers to any event particularly associated with the device that occurs during a non-emergency situation. A non-emergency event may include, for example, the device initially accessing the core network, but expressly excludes the device initiating an emergency call or receiving an emergency call re-direction signal, as these events of course occur during an emergency situation. Responsive to the non-emergency event notification, the server(s) are configured to send the emergency support information to the multi-mode device.

Correspondingly, the multi-mode device is configured to obtain, e.g., by receiving from the server(s), the emergency support information. At some point thereafter, the device receives a control command to initiate an emergency call. Upon receiving the control command, the device selects an access network over which to initiate that emergency call. More particularly, the device selects the access network over which to initiate the emergency call from the access networks indicated by the emergency support information as supporting emergency calls. The device then initiates the emergency call, responsive to the control command to do so, over the selected access network.

In some embodiments, the device is also configured to obtain a selection policy that includes one or more rules for selecting an access network from among the multiple different access networks. The selection policy may, for example, prioritize the available access networks based on whether or not each access network supports emergency calls, the type of each access network, etc. Later, the device uses the selection policy to select an access network over which to initiate an emergency call.

Regardless, the device in at least one embodiment is configured to obtain the emergency support information and/or the selection policy via one or more device management (DM) management objects (MO). A DM MO as used herein refers to any data model for information which is a logical part of the interfaces exposed by the device for management purposes (e.g., for provisioning of the device, for configuration of the device's settings and parameters, for upgrading the device's software, etc.). Furthermore, a DM MO includes one or more nodes and one or more leaves, typically structured in a tree, e.g., as an Extensible Markup Language (XML) document. This permits the values and properties of each node to be set and retrieved individually. Accordingly, the emergency support information and the selection policy may be sent to the device via a single DM MO, or via two separate DM MOs.

The above embodiments permit the device to successfully place an emergency call with minimal delay and with minimal system overhead. Of course, the present invention is not limited to the features and advantages of the above embodiments. Indeed, those skilled in the art will recognize additional features and advantages upon reading the following detailed description, and upon viewing the accompanying drawings.

### BRIEF DESCRIPTION OF THE DRAWINGS

Figure 1 is a block diagram illustrating a wireless communication system, including a multi-mode wireless communication device and a core network, according to one embodiment of the present invention.
Figure 2 is a logic flow diagram illustrating a method implemented in a core network according to one embodiment of the present invention.
Figure 3 is a logic flow diagram illustrating a method implemented by a multi-mode wireless communication device according to one embodiment of the present invention.
Figures 4A-4B illustrate a diagram of an Access Network Discovery and Selection Function (ANDSF) Device Management (DM) Management Object (MO) according to one embodiment of the present invention.
Figure 5 is a call flow diagram illustrating an example emergency call procedure according to one embodiment of the present invention.

### DETAILED DESCRIPTION

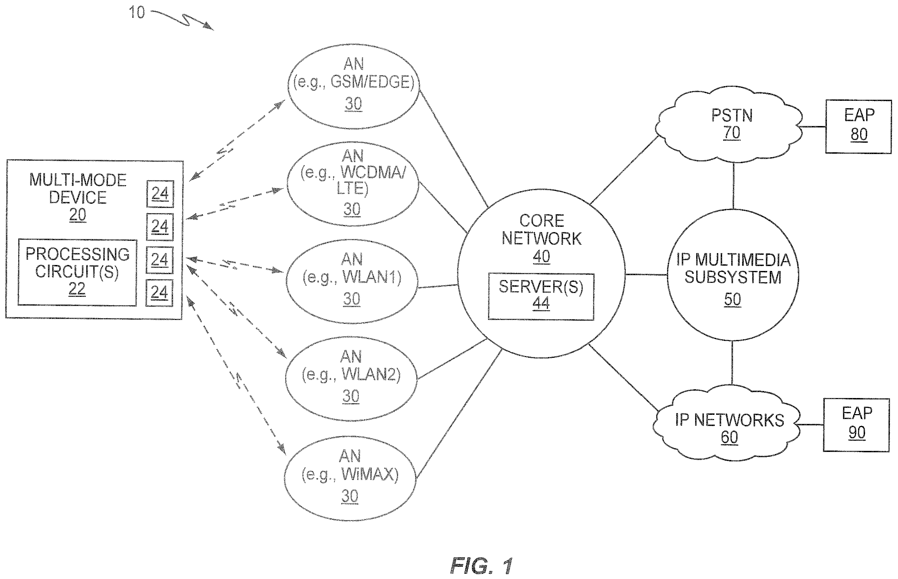

Figure 1 illustrates a wireless communications system 10 that includes one or more multi-mode wireless communication devices 20, multiple different access networks (ANs) 30, a core network (CN) 40, and an IP Multimedia Subsystem (IMS) 50.

A multi-mode wireless communication device 20 may comprise a cellular telephone or any other type of mobile terminal, such as a portable, pocket, handheld, computer-included, or vehicle-mounted device which supports multiple radio access technologies (RATs). The device 20 therefore includes one or more processing circuits 22, and multiple radio circuits 24 that are configured to access the CN 40 via any one of the multiple different ANs 30. Each of the radio circuits 24 and corresponding ANs 30 may implement a different RAT. As shown in Figure 1, for example, the radio circuits 24 and ANs 30 communicate over an air interface using GSM/EDGE, WCDMA/LTE, WiMAX, or one of multiple different WLANs. Several of these ANs 30 may be operated by the same wireless operator, or each may be maintained by a separate service provider.

The CN 40 provides a connection to an IP network 60 (e.g., the Internet) for packet switched services, and may provide a connection to the Public Switched Telephone Network (PSTN) 70 for circuit switched services. The CN 40 also interconnects to the IMS 50, e.g., via an access gateway (not shown). The IMS 50 provides access independent, IP-based multimedia services to the multi-mode device 20 and supports a variety of IP services including voice over IP (VoIP), video and audio streaming, email, web browsing, videoconferencing, instant messaging, presence and other services.

The multi-mode device 20 is configured to initiate emergency calls, e.g., responsive to user control. Emergency calls may include proprietary emergency voice calls, 911 emergency voice calls, emergency text messages, emergency instant messages, or the like. Emergency calls may also include IMS emergency calls, whereby the multi-mode device 20 establishes an IMS emergency session. Regardless of the particular type of emergency call, the system 10 routes emergency calls successfully placed by a device 20 to appropriate Emergency Answering Points (EAPs) 80, 90 via either PSTN 70 or IP network 60, which may include an emergency services network such as the wireless E911 network. EAPs 80, 90 may include, for example, designated statewide default answering points such as Public Service Answering Points (PSAPs), appropriate local emergency authorities, or proprietary emergency answering points like Onstar.

As the multi-mode device 20 supports multiple RATs, the device 20 is configured to initiate an emergency call over any one of the multiple different ANs 30. However, some of the ANs 30 may not support the emergency call. Some of the ANs 30, for example, may not be capable of prioritizing emergency calls over non-emergency calls/services, may not be able to provide sufficient quality of service for emergency calls, and/or may not offer localization services to properly route emergency calls. If the multi-mode device 20 were to initiate the emergency call over one of these ANs 30, the call would be redirected to another AN 30, which likewise may not support the emergency call. This would potentially add considerable delay to the time required for the device 20 to successfully place the emergency call.

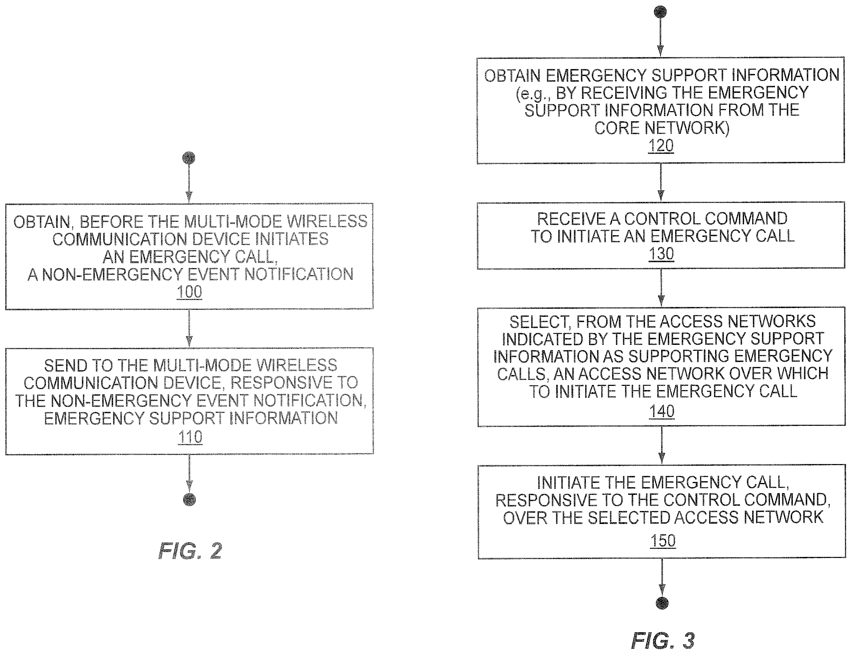

To enable the multi-mode device 20 to initiate an emergency call over an appropriate AN 30, the CN 40 includes one or more servers 44 that are configured to implement the method illustrated in Figure 2. As shown in Figure 2, the one or more servers 44 are configured to obtain, or otherwise receive, before the multi-mode device 22 initiates an emergency call, a non-emergency event notification (Block 100). The non-emergency event notification indicates to the one or more servers 44 that one or more non-emergency events associated with the device 22 have occurred. A non-emergency event as used herein refers to any event particularly associated with the device 22 that occurs during a non-emergency situation. A non-emergency event may include, for example, the device 22 initially accessing the CN 40, but expressly excludes the device 22 initiating an emergency call or receiving an emergency call re-direction signal, as these events of course occur during an emergency situation. Other examples of non-emergency events will become apparent from the description below.

The one or more servers 44 may obtain a non-emergency event notification indicating the occurrence of one or more non-emergency events by directly detecting the occurrence of those events. Alternatively, the one or more servers 44 may obtain a non-emergency event notification by receiving the notification from another node in the CN 40 or IMS 50 (e.g., a home subscriber services, HSS, node) that has detected their occurrence. A node in the CN 40 or IMS 50 may, for example, implement an Automatic Device Detection feature that detects when a new International Mobile Subscriber Identity (IMSI) and International Mobile Equipment Identity (IMEI) relation is attaching to the system 10 and, upon such detection, sends a non-emergency event notification to the one or more servers 44.

Responsive to the non-emergency event notification, the one or more servers 44 are configured to send to the multi-mode device 20 emergency support information that indicates which ANs 30 available to the device 20 support emergency calls (Block 110). The server(s) 44 thereby inform the device 20 about which ANs 30 support emergency calls, in advance of the device initiating an emergency call. Thus, in any later instance where the device 20 is used to initiate an emergency call, the device 20 may initiate the call over an AN 30 that actually supports the emergency call (as opposed to, e.g., the device 20 initiating the call over an AN 30 that does not support the emergency call and having to then be re-directed to a different AN 30).

The emergency support information may simply indicate which ANs 30, in general, support emergency calls, or may more specifically indicate which ANs 30 support one or more certain types of emergency calls. In one embodiment, for example, the emergency support information indicates which ANs 30 support IMS emergency calls (i.e., emergency calls over the IMS 50). In other embodiments, the emergency support information further indicates the geographic areas over which each AN 30 supports emergency calls. That is, although an AN 30 may implement a RAT that technically supports emergency calls, the AN 30 may nonetheless lack sufficient coverage in certain geographic areas to support emergency calls at some minimum quality of service. In this case, the one or more servers 44 are configured to send emergency support information that specifies the geographic areas where emergency calls are, or are not, supported. The geographic areas that do, or do not, support emergency calls may be identified in the emergency support information based on, for example, the Global Positioning System (GPS) coordinates of those areas, the names of the specific access points deployed at those areas, the identifiers of the cells specified at those areas, or the like.

Correspondingly, the one or more processing circuits 22 of the multi-mode device 22 are configured to implement the method illustrated in Figure 3. As shown in Figure 3, the processing circuit(s) 22 are configured to obtain e.g., by receiving from the one or more servers 44 in the CN 40, the emergency support information described above as indicating which ANs 30 support emergency calls (Block 120). At some point thereafter, the processing circuit(s) 22 receive a control command to initiate an emergency call (Block 130). The control command may be received responsive to a user of the multi-mode device 20 physically dialing a designated emergency number (e.g., 911, or 112), or responsive to one or more emergency detection signals that autonomously detect the occurrence of an emergency (e.g., one or more vehicle impact detection signals that detect the occurrence of a vehicle collision or accident, in the case that the device 20 is a vehicle-mounted device).

Upon receiving the control command to initiate an emergency call, the processing circuit(s) 22 are configured to select an AN 30 over which to initiate that emergency call (Block 140). More particularly, the processing circuit(s) 22 are configured to select the AN 30 over which to initiate the emergency call from the ANs 30 indicated by the emergency support information as supporting emergency calls. The processing circuit(s) 22 are configured to then initiate the emergency call, responsive to the control command to do so, over the selected AN 30 (Block 150).

In this way the device 20 successfully places an emergency call with minimal delay and with minimal system overhead. Because the device 20 obtains emergency support information prior to initiating an emergency call, the device 20 may intelligently select an AN 30 over which to initiate the emergency call based on which ANs 30 actually support that emergency call. This in turn eliminates or at least minimizes the possibility that the emergency call will be redirected to a different AN 30, and thereby reduces the time and system resources required for the device 20 to successfully place the emergency call.

With this in mind, those skilled in the art will appreciate that the one or more servers 44 may send, and the processing circuit(s) 22 may obtain, the emergency support information described above at any time prior to the device 20 initiating an emergency call. In one embodiment briefly described above, the server(s) 44 send and the processing circuit(s) 22 receive the emergency support information responsive to the device 20 initially accessing the CN 40. For example, when the device 20 initially accesses the CN 40, the CN 40 may push the emergency support information to the device 20, without the device 20 having to first request that information. In other embodiments, however, the server(s) 44 send and the processing circuit(s) 22 receive the emergency support information responsive to the device 20 requesting that information from the CN 40. The device 20 may request emergency support information upon initially accessing the CN 40, and/or at some point in time after the device 20 initially accesses the CN 40 but before the device 20 initiates an emergency call.

Emergency support information sent by the server(s) 44, and obtained by the processing circuit(s) 22, according to the above embodiments may nonetheless become stale over time. That is, after the device 20 initially accesses the CN 40 or requests emergency support information, the information obtained by the device 20 may no longer accurately indicate which ANs 30 available to the device 20 support emergency calls. Additional ANs 30 that support emergency calls may have since become available to the device 20, either due to the new deployment of an AN 30 or the mobility of the device 20. Moreover, ANs 30 previously indicated as being available to the device 20 and as supporting emergency calls may not be available anymore, or may not support emergency calls temporarily (e.g., technical difficulties, unusually high load, etc.). In some embodiments, therefore, the server(s) 44 are configured to send, and the processing circuit(s) 22 are configured to receive, updated emergency support information responsive to the staleness of information previously obtained by the device 20. The staleness of emergency support information may be defined to occur at periodic intervals measured by either the processing circuit(s) 22 or the server(s) 44. Alternatively or additionally, the staleness of emergency support information may be detected by the processing circuit(s) 22 based on a scan of the available ANs 30. or by the server(s) 44 based on configuration changes in the ANs 30.

Whether updated or not, the emergency support information obtained by the device 20 may indicate more specific information than just whether or not certain available ANs 30 support emergency calls. As briefly discussed above, for instance, the emergency support information in some embodiments additionally indicates the geographic areas over which each AN 30 supports emergency calls. In these cases, the processing circuit(s) 22 of the device 20 may further be configured to obtain location information indicating the device's current geographic location (e.g., via known methods like GPS, assisted-GPS, Enhanced Observed Time Difference, etc.). The processing circuit(s) 22 then select an AN 30 over which to initiate the emergency call by selecting an AN 30 that, according to the location information and the emergency support information, supports emergency calls at the device's current geographic location.

Also as discussed above, the emergency support information in other embodiments specifically indicates which ANs 30 support one or more certain types of emergency calls (e.g., IMS emergency calls). In these cases, the processing circuit(s) 22 of the device 20 may more appropriately select an AN 30 upon receiving a control command to initiate a specific type of emergency call. That is, the processing circuit(s) 22 may be configured to select, from those ANs 30 indicated by the emergency support information as supporting that specific type of emergency call, an AN 30 over which to initiate the emergency call.

These and other approaches to selecting among the multiple different ANs may be incorporated into a so-called selection policy. In some embodiments, for instance, the processing circuit(s) 22 are further configured to obtain, e.g., by also receiving from the server(s) 44 in the CN 40, a selection policy that includes one or more rules for selecting an AN 30 from among the multiple different ANs 30. The processing circuit(s) 22 can then select an AN 30 over which to initiate an emergency call based on this selection policy.

The selection policy may be generated with a concern for emergency calls and thereby include one or more rules to be used exclusively for initiating emergency calls, or may be a more generally applicable policy that was generated without regard to emergency calls (e.g., the rule(s) used for emergency calls may be the same rule(s) used for normal, non-emergency calls). With regard to the former option, the selection policy obtained by the device 20 in one embodiment includes one or more rules that prioritize only the available ANs 30 indicated by the emergency support information as supporting emergency calls. The ANs 30 may be prioritized according to one or more parameters, such as the RATs they implement. In this case, ANs 30 implementing RATs that support higher quality of service emergency calls are prioritized over ANs 30 that implement RATs that support relatively lower quality of service emergency calls. Regardless, the device 20 selects the AN 30 over which to initiate an emergency call based on the selection policy by selecting higher priority ANs 30 before selecting lower priority ANs 30.

With regard to the latter option, the selection policy obtained by the device 20 in another embodiment includes one or more rules that generally prioritize all available ANs 30, whether or not the emergency support information indicates they support emergency calls. The device 20 may therefore use this generally applicable selection policy for more common purposes, such as selecting an AN 30 over which to initiate a normal, non-emergency call. When using the selection policy to select an AN 30 over which to initiate an emergency call, however, the device 20 in one embodiment is configured to select an AN 30 according to the same prioritization, provided that the selected AN 30 supports emergency calls. That is, the device 20 determines from the emergency support information whether the highest priority AN 30 according to the generally applicable selection policy supports emergency calls, and, if so, selects that AN 30. Otherwise, the device 20 determines whether the next-highest priority AN 30 supports emergency calls and selects that AN 30 if it does, and so on.

Since, at least in this latter case, the device 20 may use the selection policy for purposes other than just emergency calls, the device 20 in some embodiments obtains the selection policy independently from the emergency support information; that is, at a different time and/or via a different provisioning approach. In general, though, the device 20 may obtain (1) only the emergency support information; (2) the emergency support information and the selection policy, both at the same time and via the same provision approach; or (3) the emergency support information and the selection policy, each at a different time and/or via a different provision approach. The same may be said for the server(s) 44 which are configured to send the emergency support information and/or the selection policy to the device 20.

In one embodiment, for example, the server(s) 44 comprise device management (DM) server(s) 44 that are configured to send the emergency support information and/or the selection policy to the device 20 via one or more DM management objects (MOs), or via update(s) to one or more DM MOs. A DM MO as used herein refers to any data model for information which is a logical part of the interfaces exposed by the device 20 for management purposes (e.g., for provisioning of the device 20, for configuration of the device's settings and parameters, for upgrading the device's software, etc.). The one or more DM MOs, or updates thereto, sent by the DM server(s) 44 to the device 20 may conform, for instance, to the Open Mobile Alliance (OMA) DM protocol.

Regardless, a DM MO includes one or more nodes and one or more leaves, typically structured in a tree as an Extensible Markup Language (XML) document. This permits the values and properties of each node to be set and retrieved individually. Accordingly, the emergency support information and the selection policy may be sent from the server(s) 44 to the device 20 via a single DM MO, via an update to a single DM MO, via two separate DM MOs, or via updates to two separate DM MOs. With regard to the former cases, a single DM MO, or an update thereto, includes one or more nodes, or leaves, that define the emergency support information, and one or more other nodes, or leaves, that define the selection policy. With regard to the latter cases, one DM MO, or an update thereto, includes one or more nodes, or leaves, that define the emergency support information (as would be the case in an embodiment where only emergency support information is obtained by the device 20), and the other DM MO, or an update thereto, includes one or more nodes, or leaves, that define the selection policy.

The one or more DM MOs by which the device 20 receives the emergency support information and/or the selection policy may be any one of several different types of MOs. That is, the device 20 may be configured to receive different types of DM MOs for managing the settings or parameters of different services, and the emergency support information and/or the selection policy may be communicated to the device 20 via any one of these. For example, the device 20 in one embodiment is configured to receive the emergency support information and/or the selection policy via one or more IMS DM MOs, which manage the settings or parameters of services provided by the IMS 50 according to 3GPP Technical Specification (TS) 24.167. In another embodiment, the device 20 is configured to receive the emergency support information and/or the selection policy via one or more Multimedia Telephony DM MOs, which manage the settings or parameters of multimedia telephone according to 3GPP TS 26.114.

In yet another embodiment, the device 20 is configured to receive the emergency support information and/or the selection policy via one or more Access Network Discovery and Selection Function (ANDSF) DM MOs, which manage intersystem mobility policies according to 3GPP Technical Specification 24.312. In this and other embodiments directed to 3GPP ANs 30, the device 20 may otherwise obtain information about which 3GPP ANs 30 support emergency calls, e.g., via 3GPP Mobility Management messages, and obtain emergency support information that primarily indicates which non-3GPP ANs 30 support emergency calls. Additionally, this emergency support information may also indicate which 3GPP ANs 30 support emergency calls, and thereby override any information otherwise obtained about those 3GPP ANs 30.

Of course, the device 20 may additionally or alternatively be configured to receive the emergency support information and/or the selection policy via one or more newly defined DM MOs, defined specifically for managing the settings or parameters of emergency services. Other embodiments include the device 20 obtaining the emergency support information and the selection policy via some combination of these different types of DM MOs.

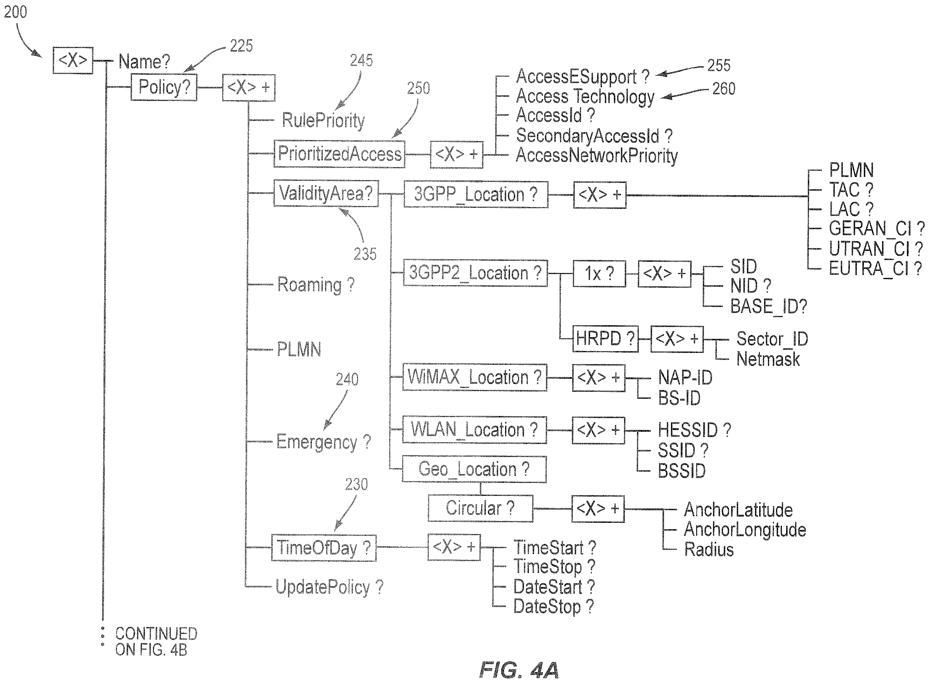

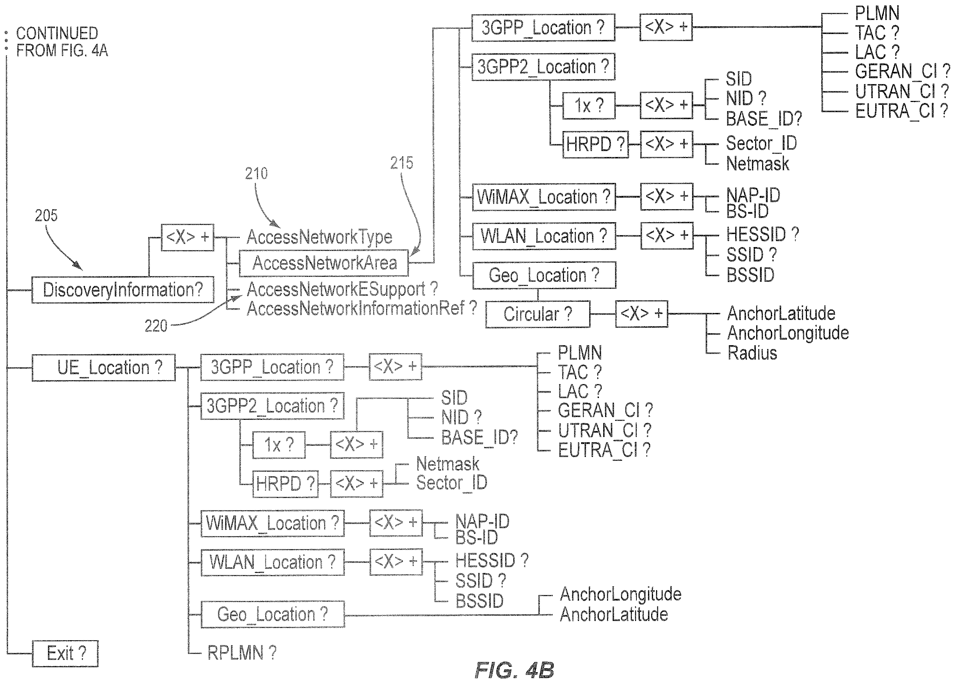

Figures 4A-4B illustrate additional details of one embodiment whereby the emergency support information and the selection policy are both provided to the device 20 via a single ANDSF DM MO. In Figures 4A-4B, the ANDSF DM MO 200 includes a tree structure comprising a variety of nodes and leaves. The nodes and leaves that include a question mark are optional. The Discoverylnformation node 205 provides the device 20 with information about available ANs 30. More specifically, the Discoverylnformation node 205, for each available AN 30, informs the device 20 about the type of that AN (via the AccessNetworkType leaf 210), the geographic areas where the AN is expected to be available (via the AccessNetworkArea node 215), and whether or not the AN supports emergency calls (via the AccessNetworkESupport leaf 220). The Discoverylnformation node 205, therefore, in conjunction with the AccessNetworkESupport leaf 220 informs the device 20 about the emergency support information discussed above. Although not shown in Figures 4A-4B, the Discoverylnformation node 205 may also, for each available AN 30, inform the device 20 about the geographic areas where the AN supports emergency calls, via for example an AccessNetworkESupportArea node that is similar to the AccessNetworkArea node 215, or more specifically inform the device 20 about which types of emergency calls the AN supports.

The Policy node 225 in Figures 4A-4B provides the device 20 with one or more rules that prioritize the available ANs 30, and therefore informs the device 20 about the selection policy discussed above. Some rules specified by this selection policy may not be applicable (i.e., valid) at all times or in all geographic areas. The TimeOfDay node 230, for instance, specifies the times during which a rule is valid and may otherwise be applied to prioritize the available ANs 30. Likewise, the ValidityArea node 235 specifies the geographic areas at which a rule is valid. Moreover, according to some embodiments whereby the selection policy is generated with a concern for emergency calls, some rules may not be valid unless the device 20 is using the selection policy during an emergency situation (e.g., to select an AN 30 over which to initiate an emergency call). In these embodiments, Emergency leaf 240 specifies whether or not a rule is only valid during an emergency situation.

With this in mind, the one or more rules are themselves prioritized according to the RulePriority leaf 230, e.g., to determine which rule to apply if more than one rule is valid at a given time, location, and situation. Higher priority rules are applied before relatively lower priority rules. In the case where the selection policy includes a rule that is to be used exclusively for initiating emergency calls, the rule is given a high priority according to the RulePriority leaf 230. Giving the rule a high priority ensures that it will be applied to initiate an emergency call before other rules, which may prioritize ANs 30 which do not support emergency calls over those ANs 30 which do support emergency calls.

The PrioritzedAccess node 250 actually prioritizes the available ANs 30 for each of the one or more rules included in the Policy node 225. A rule can prioritize the available ANs 30, for example, based on whether or not each AN supports emergency calls (via the AccessESupport leaf 255), and/or based on the type of each AN (via the AccessTechnology leaf 260), among others. Of course, those skilled in the art will appreciate that Figures 4A-4B represent just one possible embodiment of a DM MO, and that the present invention is not limited to this embodiment.

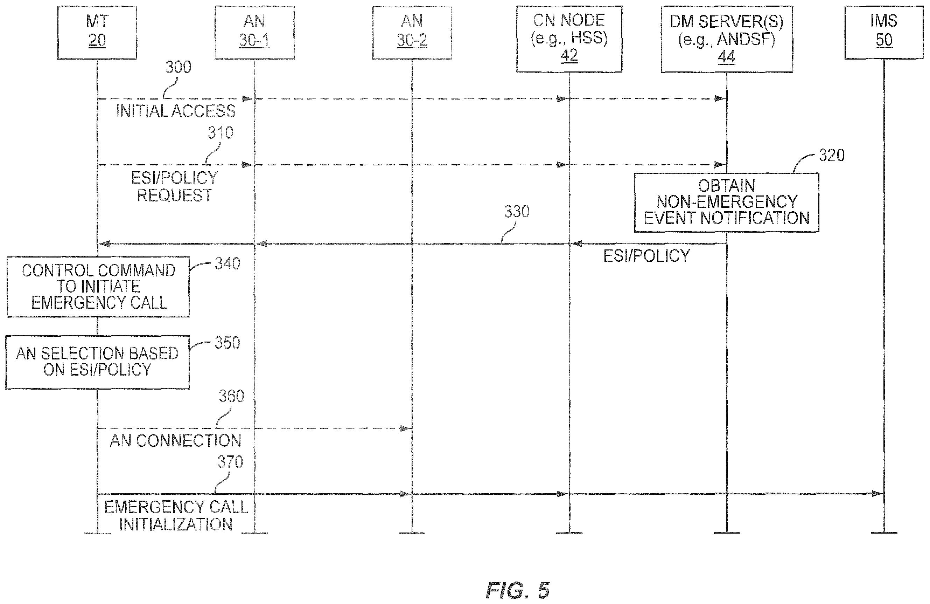

Figure 5 likewise represents one possible embodiment of the call flow occurring in the wireless communication system 10 for initiating an IMS emergency call. In Figure 5, the multi-mode device 20 initially accesses the CN 40 via AN 30-1 (Step 300). As discussed above, some node in the CN 40, e.g., CN node 42, may detect the device's initial access and, responsive thereto, send a non-emergency event notification to DM server(s) 44. Alternatively or additionally, at some point after the device's initial access, the device 20 may send a non-emergency event notification to DM server(s) 44 as a request for emergency support information (ESI) and/or a selection policy (Step 310). Regardless, DM server(s) 44 obtain the non-emergency event notification (Step 320) and send ESI and/or a selection policy to the multi-mode device 20 (Step 330). At some point after receiving ESI and/or a selection policy, the multi-mode device 20 receives a control command to initiate an IMS emergency call (Step 340) and selects which AN 30 over which to initiate the IMS emergency call based on the ESI and/or selection policy received from the DM server(s) 44 (Step 350). In Figure 5, the device 20 selects AN 30-2. Since the device 20 is not currently connected to AN 30-2, though, the device 20 connects to AN 30-2 (Step 360). Connected to AN 30-2, the device 20 initiates the IMS emergency call over AN 30-2 (Step 370).

Those skilled in the art will appreciate that the various "circuits" described may refer to a combination of analog and digital circuits, and/or one or more processors configured with software and/or firmware (e.g., stored in memory) that, when executed by the one or more processors, perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

## Claims

1. A method implemented by a multi-mode wireless communication device configured to access a core network via any one of multiple different access networks, comprising:
obtaining (120), from one or more servers in the core network, emergency support information that indicates which access networks available to the multi-mode wireless communication device support emergency calls; and thereafter
receiving (130, 340) a control command to initiate an emergency call;
selecting (140), from the access networks indicated by the emergency support information as supporting emergency calls, an access network over which to initiate said emergency call; and
initiating (150, 370) said emergency call, responsive to said control command, over said selected access network.

2. The method of claim 1, wherein obtaining (120) emergency support information comprises receiving emergency support information from the core network before receiving the control command to initiate an emergency call, responsive to at least one of:
initially accessing (300) the core network;
requesting (310) said emergency support information from the core network; or
staleness of emergency support information previously obtained by the device.

3. The method of claim 1, further comprising obtaining location information indicating the device's current geographic location, wherein obtaining (120) emergency support information comprises obtaining emergency support information that also indicates the geographic areas over which each access network supports emergency calls, and wherein selecting an access network over which to initiate said emergency call comprises selecting an access network that, according to said location information and said emergency support information, supports emergency calls at the device's current geographic location.

4. The method of claim 1, wherein obtaining (120) emergency support information comprises receiving a device management object or an update to a device management object, including one or more nodes, or leaves, that define said emergency support information.

5. The method of claim 1, wherein selecting (140), from the access networks indicated by the emergency support information as supporting emergency calls, an access network over which to initiate said emergency call comprises:
obtaining (330) a selection policy that includes one or more rules for selecting an access network; and
selecting the access network over which to initiate said emergency call based on said selection policy.

6. The method of claim 5, wherein obtaining (120) emergency support information and obtaining (330) a selection policy comprises receiving from the core network either:
a single device management object, or an update to a single device management object, including one or more nodes, or leaves, that define said emergency support information and one or more other nodes, or leaves, that define said selection policy; or
two different device management objects, or updates to two different device management objects, one including one or more nodes, or leaves, that define said emergency support information and the other including one or more nodes, or leaves, that define said selection policy.

7. The method of claim 1, wherein obtaining (120) emergency support information comprises obtaining emergency support information that indicates which access networks available to the multi-mode wireless communication device support emergency calls over an IP Multimedia Subsystem (IMS), wherein receiving a control command to initiate an emergency call comprises receiving a control command to initiate an emergency call over the IMS, and wherein selecting an access network over which to initiate said emergency call comprises selecting, from the access networks indicated by the emergency support information as supporting emergency calls over the I MS, an access network over which to initiate said emergency call.

8. A multi-mode wireless communication device (20), comprising:
multiple radio circuits (24) configured to access a core network (40) via any one of multiple different access networks (30);
**characterized by**
one or more processing circuits (22) configured to:
obtain, from one or more servers in the core network, emergency support information that indicates which access networks available to the multi-mode wireless communication device support emergency calls; and thereafter
receive a control command to initiate an emergency call;
select, from the access networks indicated by the emergency support information as supporting emergency calls, an access network over which to initiate said emergency call; and
initiate said emergency call, responsive to said control command, over said selected access network.

9. The multi-mode wireless communication device (20) of claim 8, wherein the one or more processing circuits (22) are configured to obtain emergency support information from the core network (40) before receiving the control command to initiate an emergency call, responsive to at least one of:
initially accessing the core network;
requesting said emergency support information from the core network; and
staleness of emergency support information previously obtained by the device.

10. The multi-mode wireless communication device (20) of claim 8, wherein the one or more processing circuits (22) are further configured to:
obtain location information indicating the device's current geographic location;
obtain emergency support information that also indicates the geographic areas over which each access network supports emergency calls; and
select an access network over which to initiate said emergency call by selecting an access network that, according to said location information and said emergency support information, supports emergency calls at the device's current geographic location.

11. The multi-mode wireless communication device (20) of claim 8, wherein the one or more processing circuits (32) are configured to obtain emergency support information by receiving a device management object, or an update to a device management object, including one or more nodes, or leaves, that define said emergency support information.

12. The multi-mode wireless communication device (20) of claim 8, wherein the one or more processing circuits (22) are configured to select an access network over which to initiate said emergency call by:
obtaining a selection policy that includes one or more rules for selecting an access network; and
selecting the access network over which to initiate said emergency call based on said selection policy.

13. The multi-mode wireless communication device (20) of claim 12, wherein the one or more processing circuits (22) are configured to obtain emergency support information and a selection policy by receiving from the core network (40) either:
a single device management object, or an update to a single device management object, including one or more nodes, or leaves, that define said emergency support information and one or more other nodes, or leaves, that define said selection policy; or
two different device management objects, or updates to two different device management objects one including one or more nodes, or leaves, that define said emergency support information and the other including one or more nodes, or leaves, that define said selection policy.

14. The multi-mode wireless communication device (20) of claim 8, wherein the one or more processing circuits (22) are configured to obtain emergency support information that indicates which access networks available to the multi-mode wireless communication device support emergency calls over an IP Multimedia Subsystem, IMS (50), to receive a control command to initiate an emergency call over the IMS (50), and to select, from the access networks indicated by the emergency support information as supporting emergency calls over the IMS (50), an access network over which to initiate said emergency call.

15. A method implemented in a core network for assisting a multi-mode wireless communication device, configured to access the core network via any one of multiple different access networks, with the initiation of an emergency call, the method comprising, before the multi-mode wireless communication device initiates an emergency call:
obtaining (100) a non-emergency event notification indicating the occurrence of one or more non-emergency events associated with said device; and
sending (110) to the multi-mode wireless communication device, responsive to said non-emergency event notification, emergency support information that indicates which access networks available to the device support emergency calls.

16. The method of claim 15, wherein obtaining (100) a non-emergency event notification comprises obtaining a notification indicating the occurrence of at least one of:
the device initially accessing (300) the core network;
the device requesting (310) said emergency support information from the core network; and
staleness of emergency support information previously sent to the device.

17. The method of claim 15, wherein sending (110) to the multi-mode wireless communication device emergency support information comprises sending emergency support information that indicates which access networks available to the device support emergency calls over an IP Multimedia Subsystem, IMS.

18. The method of claim 15, wherein sending (110) to the multi-mode wireless communication device emergency support information comprises sending one or more device management objects, or sending one or more updates to a device management object, that includes one or more nodes, or leaves, that define said emergency support information.

19. A system of one or more servers (44) in a core network (40) for assisting a multi-mode wireless communication device (20), configured to access the core network (40) via any one of multiple different access networks (30), with the initiation of an emergency call,
**characterized by** that the system of one or more servers (44) is configured to, before the multi-mode wireless communication device initiates an emergency call:
obtain a non-emergency event notification indicating the occurrence of one or more non-emergency events associated with said device; and
send to the multi-mode wireless communication device, responsive to said non-emergency event notification, emergency support information that indicates which access networks available to the device support emergency calls.

20. The system of claim 19, wherein the one or more servers (44) are configured to obtain a non-emergency event notification indicating the occurrence of at least one of:
the device initially accessing the core network;
the device requesting said emergency support information from the core network; or
staleness of emergency support information previously sent to the device.

21. The system of claim 19, wherein the one or more servers (44) are configured to send to the multi-mode wireless communication device emergency support information that indicates which access networks available to the device support emergency calls over an IP Multimedia Subsystem, IMS (50).

22. The system of claim 19, wherein the one or more servers (44) comprise one or more device management servers and are configured to send to the multi-mode wireless communication device one or more device management objects, or one or more updates to a device management object, that includes one or more nodes, or leaves, that define said emergency support information.

## Patentansprüche

1. Verfahren, implementiert durch eine drahtlose multimodale Kommunikationsvorrichtung, die konfiguriert ist, um über ein beliebiges einer Vielzahl von unterschiedlichen Zugriffsnetzen auf ein Kernnetz zuzugreifen, umfassend:
Erhalten (120), von einem oder mehreren Servern in dem Kernnetz, von Notfallunterstützungsinformationen, die angeben, welche der drahtlosen multimodalen Kommunikationsvorrichtung zur Verfügung stehenden Zugriffsnetze Notrufe unterstützen; und danach
Empfangen (130, 340) eines Steuerbefehls, um einen Notruf einzuleiten;
Auswählen (140) eines Zugriffsnetzes, über welches der Notruf einzuleiten ist, aus den Zugriffsnetzen, von welchen durch die Notfallunterstützungsinformationen angegeben wurde, dass sie Notrufe unterstützen; und
Einleiten (150, 370) des Notrufs als Reaktion auf den Steuerbefehl über das ausgewählte Zugriffsnetz.

2. Verfahren nach Anspruch 1, wobei Erhalten (120) von Notfallunterstützungsinformationen Empfangen von Notfallunterstützungsinformationen von dem Kernnetz vor Empfangen des Steuerbefehls, um einen Notruf einzuleiten, umfasst, als Reaktion auf mindestens eines von:
initiales Zugreifen (300) auf das Kernnetz;
Anfordern (310) der Notfallunterstützungsinformationen von dem Kernnetz; oder
Veraltetsein der Notfallunterstützungsinformationen, die zuvor durch die Vorrichtung empfangen wurden.

3. Verfahren nach Anspruch 1, ferner umfassend Erhalten von Standortinformationen, welche den aktuellen geographischen Standort der Vorrichtung angeben, wobei Erhalten (120) von Notfallunterstützungsinformationen Erhalten von Notfallunterstützungsinformationen umfasst, welche ebenfalls die geographischen Bereiche angeben, über welche jedes Zugriffsnetz Notrufe unterstützt, und wobei Auswählen eines Zugriffsnetzes, über welches der Notruf einzuleiten ist, Auswählen eines Zugriffsnetzes umfasst, welches, gemäß den Standortinformationen und den Notfallunterstützungsinformationen, Notrufe von dem aktuellen geographischen Standort der Vorrichtung aus unterstützt.

4. Verfahren nach Anspruch 1, wobei Erhalten (120) von Notfallunterstützungsinformationen Empfangen eines Vorrichtungsverwaltungsobjekts oder einer Aktualisierung für ein Vorrichtungsverwaltungsobjekt, einschließlich eines oder mehrerer Knoten oder Zweige, welche die Notfallunterstützungsinformationen definieren, umfasst.

5. Verfahren nach Anspruch 1, wobei Auswählen (140) eines Zugriffsnetzes, über welches der Notruf einzuleiten ist, aus den Zugriffsnetzen, von welchen durch die Notfallunterstützungsinformationen angegeben wurde, dass sie Notrufe unterstützen, Folgendes umfasst:
Erhalten (330) einer Auswahlrichtlinie, welche eine oder mehrere Regeln zum Auswählen eines Zugriffsnetzes umfasst; und
Auswählen des Zugriffsnetzes, über welches der Notruf einzuleiten ist, auf der Grundlage der Auswahlrichtlinie.

6. Verfahren nach Anspruch 5, wobei Erhalten (120) von Notfallunterstützungsinformationen und Erhalten (330) einer Auswahlrichtlinie Empfangen umfasst von dem Kernnetz von entweder:
einem einzelnen Vorrichtungsverwaltungsobjekt oder einer Aktualisierung für ein einzelnes Vorrichtungsverwaltungsobjekt, einschließlich eines oder mehrerer Knoten oder Zweige, welche die Notfallunterstützungsinformationen definieren, und eines oder mehrerer anderer Knoten oder Zweige, welche die Auswahlrichtlinie definieren; oder
zwei unterschiedlichen Vorrichtungsverwaltungsobjekten oder Aktualisierungen für zwei unterschiedliche Vorrichtungsverwaltungsobjekte, wobei eines einen oder mehrere Knoten oder Zweige umfasst, welche die Notfallunterstützungsinformationen definieren, und das andere einen oder mehrere Knoten oder Zweige umfasst, welche die Auswahlrichtlinie definieren.

7. Verfahren nach Anspruch 1, wobei Erhalten (120) von Notfallunterstützungsinformationen Erhalten von Notfallunterstützungsinformationen umfasst, welche angeben, welche der drahtlosen multimodalen Kommunikationsvorrichtung zur Verfügung stehenden Zugriffsnetze Notrufe über ein IP Multimedia Subsystem (IMS) unterstützen, wobei Empfangen eines Steuerbefehls, um einen Notruf einzuleiten, Empfangen eines Steuerbefehls, um einen Notruf über das IMS einzuleiten, umfasst, und wobei Auswählen eines Zugriffsnetzes, über welches der Notruf einzuleiten ist, Auswählen eines Zugriffsnetzes, über welches der Notruf einzuleiten ist, aus den Zugriffsnetzen, von welchen durch die Notfallunterstützungsinformationen angegeben wurde, dass sie Notrufe über das IMS unterstützen, umfasst.

8. Drahtlose multimodale Kommunikationsvorrichtung (20), umfassend:
eine Vielzahl von Funkschaltungen (24), die zum Zugreifen auf ein Kernnetz (40) über ein beliebiges von einer Vielzahl von unterschiedlichen Zugriffsnetzen (30) konfiguriert sind;
**gekennzeichnet durch**
eine oder mehrere Verarbeitungsschaltungen (22), die konfiguriert sind, um:
von einem oder mehreren Servern in dem Kernnetz Notfallunterstützungsinformationen zu erhalten, die angeben, welche der drahtlosen multimodalen Kommunikationsvorrichtung zur Verfügung stehenden Zugriffsnetze Notrufe unterstützen; und danach
einen Steuerbefehl zu empfangen, um einen Notruf einzuleiten;
ein Zugriffsnetz, über welches der Notruf einzuleiten ist, aus den Zugriffsnetzen, von welchen durch die Notfallunterstützungsinformationen angegeben wurde, dass sie Notrufe unterstützen, auszuwählen; und
den Notruf als Reaktion auf den Steuerbefehl über das ausgewählte Zugriffsnetz einzuleiten.

9. Drahtlose multimodale Kommunikationsvorrichtung (20) nach Anspruch 8, wobei die eine oder die mehreren Verarbeitungsschaltungen (22) konfiguriert sind, um Notfallunterstützungsinformationen von dem Kernnetz (40) vor Empfangen des Steuerbefehls, um den Notruf einzuleiten, zu erhalten, als Reaktion auf mindestens eines von:
initiales Zugreifen auf das Kernnetz;
Anfordern der Notfallunterstützungsinformationen von dem Kernnetz; und
Veraltetsein der Notfallunterstützungsinformationen, die zuvor durch die Vorrichtung empfangen wurden.

10. Drahtlose multimodale Kommunikationsvorrichtung (20) nach Anspruch 8, wobei die eine oder die mehreren Verarbeitungsschaltungen (22) ferner konfiguriert sind, um:
Standortinformationen zu erhalten, welche den aktuellen geographischen Standort der Vorrichtung angeben;
Notfallunterstützungsinformationen zu erhalten, welche ebenfalls die geographischen Bereiche angeben, über welche jedes Zugriffsnetz Notrufe unterstützt; und
ein Zugriffsnetz, über welches der Notruf einzuleiten ist, durch Auswählen eines Zugriffsnetzes, welches, gemäß den Standortinformationen und den Notfallunterstützungsinformationen, Notrufe von dem aktuellen geographischen Standort der Vorrichtung aus unterstützt, auszuwählen.

11. Drahtlose multimodale Kommunikationsvorrichtung (20) nach Anspruch 8, wobei die eine oder die mehreren Verarbeitungsschaltungen (32) konfiguriert sind, um Notfallunterstützungsinformationen durch Empfangen eines Vorrichtungsverwaltungsobjekts oder einer Aktualisierung für ein Vorrichtungsverwaltungsobjekt, einschließlich eines oder mehrerer Knoten oder Zweige, welche die Notfallunterstützungsinformationen definieren, zu erhalten.

12. Drahtlose multimodale Kommunikationsvorrichtung (20) nach Anspruch 8, wobei die eine oder die mehreren Verarbeitungsschaltungen (22) konfiguriert sind, um ein Zugriffsnetz, über welches der Notruf einzuleiten ist, auszuwählen durch:
Erhalten einer Auswahlrichtlinie, welche eine oder mehrere Regeln zum Auswählen eines Zugriffsnetzes umfasst; und
Auswählen des Zugriffsnetzes, über welches der Notruf einzuleiten ist, auf der Grundlage der Auswahlrichtlinie.

13. Drahtlose multimodale Kommunikationsvorrichtung (20) nach Anspruch 12, wobei die eine oder die mehreren Verarbeitungsschaltungen (22) konfiguriert sind, um Notfallunterstützungsinformationen und eine Auswahlrichtlinie zu erhalten, durch Empfangen von dem Kernnetz (40) von entweder:
einem einzelnen Vorrichtungsverwaltungsobjekt oder einer Aktualisierung für ein einzelnes Vorrichtungsverwaltungsobjekt, einschließlich eines oder mehrerer Knoten oder Zweige, welche die Notfallunterstützungsinformationen definieren, und eines oder mehrerer anderer Knoten oder Zweige, welche die Auswahlrichtlinie definieren; oder
zwei unterschiedlichen Vorrichtungsverwaltungsobjekten oder Aktualisierungen für zwei unterschiedliche Vorrichtungsverwaltungsobjekte, wobei eines einen oder mehrere Knoten oder Zweige umfasst, welche die Notfallunterstützungsinformationen definieren, und das andere einen oder mehrere Knoten oder Zweige umfasst, welche die Auswahlrichtlinie definieren.

14. Drahtlose multimodale Kommunikationsvorrichtung (20) nach Anspruch 8, wobei die eine oder die mehreren Verarbeitungsschaltungen (22) konfiguriert sind, um Notfallunterstützungsinformationen zu erhalten, welche angeben, welche der drahtlosen multimodalen Kommunikationsvorrichtung zur Verfügung stehenden Zugriffsnetze Notrufe über ein IP Multimedia Subsystem (IMS) (50) unterstützen, um einen Steuerbefehl, um einen Notruf über das IMS (50) einzuleiten, zu empfangen, und um ein Zugriffsnetz, über welches der Notruf einzuleiten ist, aus den Zugriffsnetzen, von welchen durch die Notfallunterstützungsinformationen angegeben wurde, dass sie Notrufe über das IMS (50) unterstützen, auszuwählen.

15. Verfahren, implementiert in einem Kernnetz, zum Unterstützen einer drahtlosen multimodalen Kommunikationsvorrichtung, die konfiguriert ist, um über ein beliebiges von einer Vielzahl von unterschiedlichen Zugriffnetzen auf das Kernnetz zuzugreifen, bei dem Einleiten eines Notrufs, wobei das Verfahren, bevor die drahtlose multimodale Kommunikationsvorrichtung einen Notruf einleitet, Folgendes umfasst:
Erhalten (100) einer Benachrichtigung über ein Nicht-Notfall-Ereignis, welche das Auftreten eines oder mehrerer mit der Vorrichtung assoziierter Nicht-Notfall-Ereignisse angibt; und
Senden (110) an die drahtlose multimodale Kommunikationsvorrichtung, als Reaktion auf die Benachrichtigung über ein Nicht-Notfall-Ereignis, von Notfallunterstützungsinformationen, welche angeben, welche der Vorrichtung zur Verfügung stehenden Zugriffsnetze Notrufe unterstützen.

16. Verfahren nach Anspruch 15, wobei Erhalten (100) einer Benachrichtigung über ein Nicht-Notfall-Ereignis Erhalten einer Benachrichtigung umfasst, welche das Auftreten von mindestens einem des Folgenden angibt:
initiales Zugreifen (300) der Vorrichtung auf das Kernnetz;
Anfordern (310) der Vorrichtung der Notfallunterstützungsinformationen von dem Kernnetz; und
Veraltetsein der Notfallunterstützungsinformationen, die zuvor an die Vorrichtung gesendet wurden.

17. Verfahren nach Anspruch 15, wobei Senden (110) von Notfallunterstützungsinformationen an die drahtlose multimodale Kommunikationsvorrichtung Senden von Notfallunterstützungsinformationen umfasst, welche angeben, welche der Vorrichtung zur Verfügung stehenden Zugriffsnetze Notrufe über ein IP Multimedia Subsystem, IMS, unterstützen.

18. Verfahren nach Anspruch 15, wobei Senden (110) von Notfallunterstützungsinformationen an die drahtlose multimodale Kommunikationsvorrichtung Senden von einem oder mehreren Vorrichtungsverwaltungsobjekten oder Senden von einer oder mehreren Aktualisierungen für ein Vorrichtungsverwaltungsobjekt, welches einen oder mehrere Knoten oder Zweige umfasst, welche die Notfallunterstützungsinformationen definieren, umfasst.

19. System von einem oder mehreren Servern (44) in einem Kernnetz (40) zum Unterstützen einer drahtlosen multimodalen Kommunikationsvorrichtung (20), die konfiguriert ist, um über ein beliebiges von einer Vielzahl von unterschiedlichen Zugriffnetzen (30) auf das Kernnetz (40) zuzugreifen, bei dem Einleiten eines Notrufs, **dadurch gekennzeichnet, dass** das System von einem oder mehreren Servern (44), bevor die drahtlose multimodale Kommunikationsvorrichtung einen Notruf einleitet, konfiguriert ist, um:
eine Benachrichtigung über ein Nicht-Notfall-Ereignis, welche das Auftreten eines oder mehrerer mit der Vorrichtung assoziierter Nicht-Notfall-Ereignisse angibt, zu erhalten; und
an die drahtlose multimodale Kommunikationsvorrichtung, als Reaktion auf die Benachrichtigung über ein Nicht-Notfall-Ereignis, Notfallunterstützungsinformationen, welche angeben, welche der Vorrichtung zur Verfügung stehenden Zugriffsnetze Notrufe unterstützen, zu senden.

20. System nach Anspruch 19, wobei der eine oder die mehreren Server (44) konfiguriert sind, um eine Benachrichtigung über ein Nicht-Notfall-Ereignis zu erhalten, welche das Auftreten von mindestens einem des Folgenden angibt:
initiales Zugreifen der Vorrichtung auf das Kernnetz;
Anfordern der Vorrichtung der Notfallunterstützungsinformationen von dem Kernnetz; oder
Veraltetsein der Notfallunterstützungsinformationen, die zuvor an die Vorrichtung gesendet wurden.

21. System nach Anspruch 19, wobei der eine oder die mehreren Server (44) konfiguriert sind, um Notfallunterstützungsinformationen, welche angeben, welche der Vorrichtung zur Verfügung stehenden Zugriffsnetze Notrufe über ein IP Multimedia Subsystem, IMS (50), unterstützen, an die drahtlose multimodale Kommunikationsvorrichtung zu senden.

22. System nach Anspruch 19, wobei der eine oder die mehreren Server (44) einen oder mehrere Vorrichtungsverwaltungsserver umfassen und konfiguriert sind, um ein oder mehrere Vorrichtungsverwaltungsobjekte oder eine oder mehrere Aktualisierungen für ein Vorrichtungsverwaltungsobjekt, welches einen oder mehrere Knoten oder Zweige umfasst, welche die Notfallunterstützungsinformationen definieren, an die drahtlose multimodale Kommunikationsvorrichtung zu senden.

## Revendications

1. Procédé mis en oeuvre par un dispositif multimodal de communication sans fil configuré pour accéder à un réseau central par le biais de l'un quelconque de multiples réseaux d'accès différents comprenant :
l'obtention (120), à partir d'un ou plusieurs serveurs dans le réseau central, d'informations de support d'urgence qui indiquent quels réseaux d'accès disponibles pour le dispositif multimodal de communication sans fil supportent des appels d'urgence ; et ensuite
la réception (130, 340) d'une instruction de commande pour lancer un appel d'urgence ;
la sélection (140), à partir des réseaux d'accès indiqués par les informations de support d'urgence comme supportant des appels d'urgence, d'un réseau d'accès sur lequel lancer ledit appel d'urgence ; et
le lancement (150, 370) dudit appel d'urgence, en réponse à ladite instruction de commande, sur ledit réseau d'accès sélectionné.

2. Procédé selon la revendication 1, dans lequel l'obtention (120) d'informations de support d'urgence comprend la réception d'informations de support d'urgence à partir du réseau central avant la réception de l'instruction de commande pour lancer un appel d'urgence, en réponse à au moins un parmi :
l'accès initial (300) au réseau central ;
la demande (310) desdites informations de support d'urgence à partir du réseau central ; ou
par défaut d'informations de support d'urgence précédemment obtenues par le dispositif.

3. Procédé selon la revendication 1, comprenant en outre l'obtention d'informations de localisation indiquant la position géographique actuelle du dispositif, dans lequel l'obtention (120) d'informations de support d'urgence comprend l'obtention d'informations de support d'urgence qui indiquent également les zones géographiques sur lesquelles chaque réseau d'accès supporte des appels d'urgence, et dans lequel la sélection d'un réseau d'accès sur lequel lancer ledit appel d'urgence comprend la sélection d'un réseau d'accès qui, en fonction desdites informations de localisation et desdites informations de support d'urgence, supporte des appels d'urgence au niveau de la position géographique actuelle du dispositif.

4. Procédé selon la revendication 1, dans lequel l'obtention (120) d'informations de support d'urgence comprend la réception d'un objet de gestion de dispositif ou d'une mise à jour à un objet de gestion de dispositif, comprenant un ou plusieurs noeuds, ou noeuds terminaux, qui définissent lesdites informations de support d'urgence.

5. Procédé selon la revendication 1, dans lequel la sélection (140), à partir des réseaux d'accès indiqués par les informations de support d'urgence comme supportant des appels d'urgence, d'un réseau d'accès sur lequel lancer ledit appel d'urgence comprend :
l'obtention (330) d'une politique de sélection qui comprend une ou plusieurs règles pour sélectionner le réseau d'accès ; et
la sélection du réseau d'accès sur lequel lancer ledit appel d'urgence sur la base de ladite politique de sélection.

6. Procédé selon la revendication 5, dans lequel l'obtention (120) d'informations de support d'urgence et l'obtention (330) d'une politique de sélection comprennent la réception à partir du réseau central de l'un ou l'autre :
d'un unique objet de gestion de dispositif ou d'une mise à jour à un unique objet de gestion de dispositif, comprenant un ou plusieurs noeuds, ou noeuds terminaux, qui définissent lesdites informations de support d'urgence et un ou plusieurs autres noeuds, ou noeuds terminaux, qui définissent ladite politique de sélection ; ou
de deux objets de gestion de dispositif différents ou de deux mises à jour à deux objets de gestion de dispositif différents, un comprenant un ou plusieurs noeuds, ou noeuds terminaux, qui définissent lesdites informations de support d'urgence et l'autre comprenant un ou plusieurs noeuds, ou noeuds terminaux, qui définissent ladite politique de sélection.

7. Procédé selon la revendication 1, dans lequel l'obtention (120) d'informations de support d'urgence comprend l'obtention d'informations de support d'urgence qui indiquent quels réseaux d'accès disponibles pour le dispositif multimodal de communication sans fil supportent des appels d'urgence sur un sous-système multimédia IP (IMS), dans lequel la réception d'une instruction de commande pour lancer un appel d'urgence comprend la réception d'une instruction de commande pour lancer un appel d'urgence sur l'IMS, et dans lequel la sélection d'un réseau d'accès sur lequel lancer ledit appel d'urgence comprend la sélection, à partir des réseaux d'accès indiqués par les informations de support d'urgence comme supportant des appels d'urgence sur l'IMS, d'un réseau d'accès sur lequel lancer ledit appel d'urgence.

8. Dispositif multimodal de communication sans fil (20) comprenant :
de multiples circuits radio (24) configurés pour accéder à un réseau central (40) par le biais de l'un quelconque de multiples réseaux d'accès différents (30) ;
**caractérisé par**
un ou plusieurs circuits de traitement (22) configurés pour :
obtenir, à partir d'un ou plusieurs serveurs dans le réseau central, d'informations de support d'urgence qui indiquent quels réseaux d'accès disponibles pour le dispositif multimodal de communication sans fil supportent des appels d'urgence ; et ensuite
recevoir une instruction de commande pour lancer un appel d'urgence ;
sélectionner, à partir des réseaux d'accès indiqués par les informations de support d'urgence comme supportant des appels d'urgence, un réseau d'accès sur lequel lancer ledit appel d'urgence ; et
lancer ledit appel d'urgence, en réponse à ladite instruction de commande, sur ledit réseau d'accès sélectionné.

9. Dispositif multimodal de communication sans fil (20) selon la revendication 8, dans lequel les un ou plusieurs circuits de traitement (22) sont configurés pour obtenir des informations de support d'urgence à partir du réseau central (40) avant de recevoir l'instruction de commande pour lancer un appel d'urgence, en réponse à au moins un parmi :
l'accès initial au réseau central ;
la demande desdites informations de support d'urgence à partir du réseau central ; et
par défaut d'informations de support d'urgence précédemment obtenues par le dispositif.

10. Dispositif multimodal de communication sans fil (20) selon la revendication 8, dans lequel les un ou plusieurs circuits de traitement (22) sont configurés en outre pour :
obtenir des informations de localisation indiquant la position géographique actuelle du dispositif ;
obtenir des informations de support d'urgence qui indiquent également les zones géographiques sur lesquelles chaque réseau d'accès supporte des appels d'urgence ; et
sélectionner un réseau d'accès sur lequel lancer ledit appel d'urgence en sélectionnant un réseau d'accès qui, en fonction desdites informations de localisation et desdites informations de support d'urgence, supporte des appels d'urgence au niveau de la position géographique actuelle du dispositif.

11. Dispositif multimodal de communication sans fil (20) selon la revendication 8, dans lequel les un ou plusieurs circuits de traitement (32) sont configurés pour obtenir des informations de support d'urgence en recevant un objet de gestion de dispositif ou une mise à jour à un objet de gestion de dispositif, comprenant un ou plusieurs noeuds, ou noeuds terminaux, qui définissent lesdites informations de support d'urgence.

12. Dispositif multimodal de communication sans fil (20) selon la revendication 8, dans lequel les un ou plusieurs circuits de traitement (22) sont configurés pour sélectionner un réseau d'accès sur lequel lancer ledit appel d'urgence par :
l'obtention d'une politique de sélection qui comprend une ou plusieurs règles pour sélectionner le réseau d'accès ; et
la sélection du réseau d'accès sur lequel lancer ledit appel d'urgence sur la base de ladite politique de sélection.

13. Dispositif multimodal de communication sans fil (20) selon la revendication 12, dans lequel les un ou plusieurs circuits de traitement (22) sont configurés pour obtenir des informations de support d'urgence et une politique de sélection en recevant à partir du réseau central (40) l'un ou l'autre :
d'un unique objet de gestion de dispositif ou d'une mise à jour à un unique objet de gestion de dispositif, comprenant un ou plusieurs noeuds, ou noeuds terminaux, qui définissent lesdites informations de support d'urgence et un ou plusieurs autres noeuds, ou noeuds terminaux, qui définissent ladite politique de sélection ; ou
de deux objets de gestion de dispositif différents ou de deux mises à jour à deux objets de gestion de dispositif différents, un comprenant un ou plusieurs noeuds, ou noeuds terminaux, qui définissent lesdites informations de support d'urgence et l'autre comprenant un ou plusieurs noeuds, ou noeuds terminaux, qui définissent ladite politique de sélection.

14. Dispositif multimodal de communication sans fil (20) selon la revendication 8, dans lequel les un ou plusieurs circuits de traitement (22) sont configurés pour obtenir des informations de support d'urgence qui indiquent quels réseaux d'accès disponibles pour le dispositif multimodal de communication sans fil supportent des appels d'urgence sur un sous-système multimédia IP, IMS (50), pour recevoir une instruction de commande pour lancer un appel d'urgence sur l'IMS (50), et pour sélectionner, à partir des réseaux d'accès indiqués par les informations de support d'urgence comme supportant des appels d'urgence sur l'IMS (50), d'un réseau d'accès sur lequel lancer ledit appel d'urgence.

15. Procédé mis en oeuvre dans un réseau central pour assister un dispositif multimodal de communication sans fil, configuré pour accéder à un réseau central par le biais de l'un quelconque de multiples réseaux d'accès différents, dans le lancement d'un appel d'urgence, le procédé comprenant, avant que le dispositif multimodal de communication sans fil lance un appel d'urgence :
l'obtention (100) d'une notification d'événement non d'urgence indiquant la survenance d'un ou plusieurs événements non d'urgence associés audit dispositif ; et
la transmission (110) au dispositif multimodal de communication sans fil, en réponse à ladite notification d'événement non d'urgence, d'informations de support d'urgence qui indiquent quels réseaux d'accès disponibles pour le dispositif supportent des appels d'urgence.

16. Procédé selon la revendication 15, dans lequel l'obtention (100) d'une notification d'événement non d'urgence comprend l'obtention d'une notification indiquant la survenance d'au moins un parmi :
le dispositif accédant initialement (300) au réseau central ;
le dispositif demandant (310) lesdites informations de support d'urgence à partir du réseau central ; et
par défaut des informations de support d'urgence précédemment envoyées au dispositif.

17. Procédé selon la revendication 15, dans lequel la transmission (110) au dispositif multimodal de communication sans fil d'informations de support d'urgence comprend la transmission d'informations de support d'urgence qui indiquent quels réseaux d'accès disponibles pour le dispositif supportent des appels d'urgence sur un sous-système multimédia IP, IMS.

18. Procédé selon la revendication 15, dans lequel la transmission (110) au dispositif multimodal de communication sans fil d'informations de support d'urgence comprend la transmission d'un ou plusieurs objets de gestion de dispositif ou la transmission d'une ou plusieurs mises à jour à un objet de gestion de dispositif, qui comprennent un ou plusieurs noeuds, ou noeuds terminaux, qui définissent lesdites informations de support d'urgence.

19. Système d'un ou plusieurs serveurs (44) dans un réseau central (40) pour assister un dispositif multimodal de communication sans fil (20), configuré pour accéder au réseau central (40) par le biais de l'un quelconque de multiples réseaux d'accès différents (30), dans le lancement d'un appel d'urgence, **caractérisé en ce que** le système d'un ou plusieurs serveurs (44) est configuré pour, avant que le dispositif multimodal de communication sans fil lance un appel d'urgence :
obtenir une notification d'événement non d'urgence indiquant la survenance d'un ou plusieurs événements non d'urgence associés audit dispositif ; et
envoyer au dispositif multimodal de communication sans fil, en réponse à ladite notification d'événement non d'urgence, des informations de support d'urgence qui indiquent quels réseaux d'accès disponibles pour le dispositif supportent des appels d'urgence.

20. Système selon la revendication 19, dans lequel les un ou plusieurs serveurs (44) sont configurés pour obtenir une notification d'événement non d'urgence indiquant la survenance d'au moins un parmi :
le dispositif accédant initialement au réseau central ;
le dispositif demandant lesdites informations de support d'urgence à partir du réseau central ; ou
par défaut des informations de support d'urgence précédemment envoyées au dispositif.

21. Système selon la revendication 19, dans lequel les un ou plusieurs serveurs (44) sont configurés pour envoyer au dispositif multimodal de communication sans fil des informations de support d'urgence qui indiquent quels réseaux d'accès disponibles pour le dispositif supportent des appels d'urgence sur un sous-système multimédia IP, IMS (50).

22. Système selon la revendication 19, dans lequel les un ou plusieurs serveurs (44) comprennent un ou plusieurs serveurs de gestion de dispositifs et sont configurés pour envoyer au dispositif multimodal de communication sans fil un ou plusieurs objets de gestion de dispositif ou une ou plusieurs mises à jour à un objet de gestion de dispositif, qui comprennent un ou plusieurs noeuds, ou noeuds terminaux, qui définissent lesdites informations de support d'urgence.
